# EUROPÄISCHE PATENTSCHRIFT

(11) **EP 2 022 688 B1**
(45) Veröffentlichungstag und Bekanntmachung des Hinweises auf die Patenterteilung: **29.12.2010**
(21) Anmeldenummer: 08161158.4
(22) Anmeldetag: 25.07.2008
(51) Int. Cl.: B60T 7/20, B60T 13/08

(54) **Zusatzbremssystem und Lösevorrichtung für Zusatzbremssysteme zur Betätigung der Bremsen auflaufgebremster Anhängerfahrzeuge**
Additional brake system and release device for additional braking system for actuating the brakes on inertia braked trailer vehicles
Système de freinage supplémentaire et dispositif de déclenchement pour systèmes de freinage supplémentaires pour l'actionnement de freins de remorques à inertie

(30) Priorität: 06.08.2007 DE 102007036909
(43) Veröffentlichungstag der Anmeldung: 11.02.2009
(73) Patentinhaber: BPW Fahrzeugtechnik GmbH & Co. KG, 33104 Paderborn (DE); Reich GmbH Regel- und Sicherheitstechnik, 35713 Eschenburg-Wissenbach (DE)
(72) Erfinder: Joachim, Michael, 33129 Delbrück (DE); Manz, Stefan, 51588 Nümbrecht (DE); Müller, Matthias, 51105 Köln (DE); Schneider, Peter, 51597 Morsbach (DE); Bender, Steffen, 35713 Eschenburg (DE); Beijersbergen van Henegouwen, Cornelis Martin, 5314 AP Bruchem (NL)
(74) Vertreter: Christophersen, Ulrich Rudolf

(56) Entgegenhaltungen:
- EP-A- 1 834 852
- GB-A- 450 500
- GB-A- 936 005
- US-A- 3 746 132

## Beschreibung

Die Erfindung betrifft ein Zusatzbremssystem zur Betätigung der Bremsen auflaufgebremster Anhängerfahrzeuge, mit einem bei Bremsbetätigung im Kraftfluss liegenden Zugelement, das über ein Betätigungselement von einer Ausgangsstellung in eine Betätigungsstellung bewegbar und über einen Kopplungspunkt an Bremskomponenten des Anhängerfahrzeugs anbindbar ist. Ferner betrifft die Erfindung eine Lösevorrichtung für Zusatzbremssysteme, mit einem Kopplungspunkt zur Anbindung an Komponenten einer Fahrzeugbremse, und einem Montagepunkt zur Anbindung an ein Zugelement des Zusatzbremssystems

Zusatzbremssysteme finden vor allem bei auflaufgebremsten Anhängerfahrzeugen Verwendung. Bei solchen Anhängerfahrzeugen ist im Bereich der Zugdeichsel eine Auflaufbremseinrichtung angeordnet, bei der der hintere Teil gegenüber dem vorderen Teil verschiebbar gehalten ist. Beim Abbremsen des Zugfahrzeugs verschiebt sich der hintere Teil gegenüber dem vorderen Teil in Fahrtrichtung, wodurch die Auflaufbremseinrichtung vorübergehend kürzer wird und das Anhängerfahrzeug auf das Zugfahrzeug aufläuft. Diese Relativbewegung wird zur Betätigung der Fahrzeugsbremsen des Anhängerfahrzeugs genutzt, wozu die Relativbewegung von der Auflaufbremseinrichtung über weitere Bremskomponenten, meist ein Bremsgestänge, zu den im Heckbereich des Fahrzeugs angeordneten Fahrzeugbremsen hin übertragen wird.

Durch die Auflaufbremseinrichtung wird eine Betätigung der Bremsen des Anhängerfahrzeugs in Abhängigkeit der Bremsvorgänge des Zugfahrzeugs erreicht.

GB 450 500 A offenbart ein Bremsmechanismus für Anhängerfahrzeuge die nach einer Relativbewegung zwischen dem Anhänger und dem Traktor die Bremsen ganz oder teilweise löst, worin die Leistungakkumulatoren durch ein Element mit einem variablen Getriebe-Moment verbunden sind.

Ergänzend werden auflaufgebremste Anhängerfahrzeuge oftmals mit Zusatzbremssystemen versehen, die über ein Zugelement an Bremskomponenten des Anhängerfahrzeugs angreifen und durch Aufbringen einer Zugkraft ein Abbremsen des Anhängerfahrzeugs unabhängig von den Bremsvorgängen des Zugfahrzeugs erlauben. Die Zusatzbremssysteme werden eingesetzt, um entweder parallel zu der Auflaufbremsung die Bremsleistung zu erhöhen, oder um unabhängig vom Zugfahrzeug, z. B. im Falle von Schlingerbewegungen des Anhängerfahrzeugs, gezielt nur das Anhängerfahrzeug abbremsen zu können.

Solche Zusatzbremssysteme sind mit einem Zugelement versehen, das parallel zu den Bremskomponenten des Anhängerfahrzeugs, etwa der Auflaufbremse, dem Bremsgestänge, oder ähnlichen die Bremskraft übertragenden Teilen, eine Betätigung der Fahrzeugbremse erlaubt. Das Zugelement liegt bei Betätigung der Fahrzeugbremse im Kraftfluss einer vom Zusatzbremssystem erzeugten Bremskraft und wird von einer Ausgangsstellung in eine Bremsbetätigungsstellung bewegt. Über einen Kopplungspunkt ist das Zugelement an Komponenten der Fahrzeugbremse angebunden, weshalb diese der Bewegung des Zugelements in die Betätigungsstellung folgen und die Fahrzeugbremse betätigt wird.

Die Betätigungsstellung wird eine gewisse Zeit aufrecht erhalten, bis sich die gewünschte Bremswirkung am Anhängerfahrzeug eingestellt hat. Beispielsweise im Falle von Schlinger-Bremsungen wird die Betätigungsstellung des Zugelements über einen vorbestimmten Zeitraum, z.B. zehn Sekunden, gehalten, bis die Schlingerbewegungen abgeklungen sind.

Die zur Bereitstellung der erforderlichen Kraft vorgesehenen Betätigungselemente arbeiten vornehmlich elektrisch, weshalb es aufgrund von Stromausfällen, z. B. infolge verschleißbedingter Kabelbrüche, zum Ausfall des Zusatzbremssystems kommen kann. Ein Ausfall des Zusatzbremssystems ist vor allem in der Betätigungsstellung nachteilig. Denn bei einem solchen Ausfall kann es vorkommen, dass die in der Betätigungsstellung an der Fahrzeugbremse anliegende Bremskraft erhalten bleibt, so dass die Bremse im weiteren Fahrbetrieb eine Dauerbremsung ausführt, was zum Heißlaufen der Bremse bis hin zum vollständigen Bremsversagen führen kann.

Der Erfindung liegt die Aufgabe zugrunde, ein Zusatzbremssystem und eine Lösevorrichtung für Zusatzbremssystems anzugeben, bei welchen die Gefahr eines Heißlaufens der Bremse bei Ausfall des Zusatzbremssystems reduziert ist.

Zur **Lösung** dieser Aufgabe wird bei einem Zusatzbremssystem der eingangs genannten Art vorgeschlagen, dass dieses eine in der Betätigungsstellung des Zugelements gespannte Rückstellfeder aufweist, die den Kopplungspunkt in Richtung der Ausgangsstellung mit einer Kraft beaufschlagt.

Über die Rückstellfeder wird der Kopplungspunkt in der Betätigungsstellung in Richtung der Ausgangsstellung mit einer Kraft beaufschlagt, so dass z.B. im Falle eines Ausfalls des Betätigungselements das Zugelement durch Entspannen der Rückstellfeder mechanisch in seine Ausgangslage bewegbar ist. Dabei lösen sich die Reibbeläge der Fahrzeugbremse von ihrem Reibpartner, so dass Heißläufer der Bremse vermieden werden. Die Rückstellfeder ist in der Betätigungsstellung gespannt, so dass die gespeicherte Federenergie unabhängig von der Stromversorgung des Anhängerfahrzeugs zur Erreichung der Ausgangsposition zur Verfügung steht. Das Betätigungselement ist vorzugsweise ein Elektromotor. Elektromotoren sind als Standartteile in verschiedenen Abmessungen und Leistungsklassen erhältlich. Zum Bewegen des Zugelements kann dieses beispielsweise mit einer Zahnstange und die Motorwelle des Elektromotors mit einem Zahnrad versehen seien, es sich jedoch auch andere Lösungen denkbar, etwa mit Zahnriemen und ähnlichen Elementen.

Vorteilhaft sind das Betätigungselement und das Zugelement über ein Getriebe miteinander wirkverbunden. Durch eine entsprechende Auslegung des Getriebes können vergleichsweise leistungsschwache Elektromotoren zur Aufbringung der Bremskräfte eingesetzt werden. Für ein geringes Anlaufmoment des Getriebes ist es in diesem Zusammenhang von Vorteil, wenn dessen Zahnräder aus Kunststoff gefertigt sind. Auch das Vorsehen von Radialzahnrädern bzw. die Vermeidung von Schneckenwellen ist einem geringen Anlaufmoment zuträglich.

In vorteilhafter Ausgestaltung wird vorgeschlagen, dass das Getriebe ein freilaufendes Getriebe ist. Bei einem freilaufenden Getriebe ist das Zugelement u.a. aufgrund der gewählten Getriebeüber- bzw. -untersetzung bei Ausfall des Betätigungselements noch bewegbar und nicht durch die Zahnräder des Getriebes blockiert. Von daher lässt sich bei Ausfall des Zusatzbremssystems der Kopplungspunkt in Richtung der Ausgangsstellung bewegen.

In diesem Zusammenhang ist es für eine einfache Bauweise des Zusatzbremssystems von Vorteil, wenn der Kopplungspunkt an dem Zugelement ausgebildet ist. Da sich das Zugelement in die Ausgangsstellung bewegen lässt, kann der Kopplungspunkt ortsfest an dem Zugelement ausgebildet werden. Der Kopplungspunkt kann dabei direkt von dem Zugelement, beispielsweise einer in diesem ausgebildeten Bohrung, Nut ö.ä. gebildet werden, oder durch Zusatzelemente wie etwa Schrauben, Schellen usw. Eine Relativbewegung zwischen dem Kopplungspunkt und dem Zugelement ist nicht erforderlich.

In weiterer Ausgestaltung des Erfindungsgedankens wird vorgeschlagen, dass die Rückstellfeder zwischen einem mit dem Zugelement bewegbaren Element und einem gegenüber dem Fahrzeugrahmen feststehenden Element eingespannt ist.

Eine Weiterbildung sind darüber hinaus vor, dass die Rückstellfeder zwischen einem mit dem Zugelement bewegbaren Ring und einer Gehäuseöffnung des Gehäuses des Zusatzbremssystems untergebracht ist.

Eine weitere Ausgestaltung sieht vor, dass das Getriebe ein Getriebe mit Selbsthemmung ist. Bei einem solchen Getriebe lässt sich das Zugelement bei Ausfall des Betätigungselements nicht bewegen.

Bei Getrieben mit Selbsthemmung ist es von Vorteil, wenn der Kopplungspunkt gegenüber dem Zugelement bewegbar ist, so dass das festsitzende Zugelement zur Überführung des Kopplungspunktes in die Ausgangsstellung und damit zum Lösen der Bremse nicht bewegt zu werden braucht. Darüber hinaus kann diese Ausgestaltung auch bei freilaufenden Getrieben von Vorteil sein, etwa dann, wenn die Bauteile des Getriebes in der Betätigungsstellung aufgrund sonstiger Umstände blockiert sind.

Weiter wird vorgeschlagen, dass der Kopplungspunkt an einer mit dem Zugelement verbundenen Lösevorrichtung vorgesehen ist. Da sich die Zugstange bei einem selbsthemmenden Getriebe nicht ohne Weiteres bewegen lässt, ist der Kopplungspunkt an einer längenveränderlichen Lösevorrichtung vorgesehen. Durch Änderung der Länge der Lösevorrichtung kann der Kopplungspunkt bei feststehendem Zugelement in Richtung der Ausgangsstellung bewegt werden. Die Lösevorrichtung kann in einem Stück mit dem Zugelement verbunden sein, wodurch sich eine geringe Teilezahl ergibt, oder über einen Montagepunkt, so dass sich die Lösevorrichtung auch als Nachrüstlösung eignet. In konstruktiver Hinsicht ist von Vorteil, wenn die Rückstellfeder Teil der Lösevorrichtung bzw. des Längenausgleichselements ist.

Ebenfalls in Hinblick auf eine einfache Konstruktion wird vorgeschlagen, dass das Längenausgleichselement einen zwischen zwei Anschlagflächen hin und her bewegbaren Zylinder aufweist, in dessen Innerem eine Hydraulikflüssigkeit und ein mit einer Durchstromöffnung versehener Kolben angeordnet ist.

Ferner wird vorgeschlagen, dass der Zylinder auf seinem Umfang mit einem Radialbund versehen ist, und die Rückstellfeder zwischen dem Bund und der Anschlagfläche angeordnet ist.

Zur Entlastung des Elektromotors wird in weiterer Ausgestaltung vor allem für Ausgestaltungen mit freilaufenden Getrieben vorgeschlagen, dass eine Haltevorrichtung vorgesehen ist, die die Motorwelle des Elektromotors in der Betätigungsstellung gegen Verdrehen sichert. Die Motorwelle wird in der Betätigungsstellung gehalten, ohne dass der Motor die hierzu erforderlich Haltekraft aufbringen müsste. Die Verdrehsicherung erfolgt durch Blockieren in der entsprechenden Drehlage. Einem geringen Kraftaufwand ist es dabei zuträglich, wenn die Haltevorrichtung direkt im Bereich der Motorwelle und nicht erst abseits des Getriebes eingreift.

Die Haltevorrichtung kann einen Elektromagneten aufweisen, über den ein Betätigungsstift axial bewegbar ist. Elektromagneten sind für solche Axialbewegungen gut geeignet. Zudem kann der Elektromagnet so eingestellt werden, dass bei Bestromung des Magneten die Motorwelle blockiert und bei Stromunterbrechung die Blockade automatisch aufgehoben wird. Im Falle eines Stromausfalls wird die Motorwelle daher freigegeben, so dass bei einem freilaufenden Getriebe dessen Freilaufeigenschaften nicht gestört werden.

Schließlich wird mit Blick auf eine einfache und gleichzeitig zuverlässig funktionierende Konstruktion vorgeschlagen, dass der Stift an seinem freien Ende mit der einen Seite einer Wippe verbunden ist, deren andere Seite verdrehsicher gegen ein Element der Motorwelle schwenkbar ist.

Zur **Lösung** der genannten Aufgabe wird bei einer Lösevorrichtung der eingangs genannten Art vorgeschlagen, dass er Abstand zwischen dem Kopplungspunkt und dem Montagepunkt veränderbar ist.

Durch Einsatz einer solchen Lösevorrichtung wird die Gefahr des Heißlaufens der Bremse reduziert. Durch den veränderbaren Abstand zwischen dem Kopplungspunkt und dem Montagepunkt kann eine über das Zugelement eines Zusatzbremssystems zugespannte Bremse selbst dann gelöst werden, wenn sich bei Ausfall des Zusatzbremssystems das Zugelement nicht mehr bewegen lässt.

Weitere Einzelheiten und Vorteile eines erfindungsgemäßen Zusatzbremssystems und einer Lösevorrichtung für Zusatzbremssysteme werden nachfolgend anhand eines in den Figuren dargestellten Ausführungsbeispiels erläutert. Darin zeigen:
- Figur 1: eine perspektivische Ansicht einer Zugdeichsel eines auflaufgebremsten Anhängerfahrzeugs mit Zusatzbremssystem,
- Figur 2: eine weitere Ansicht der Zugdeichsel aus Figur 1,
- Figur 3: eine perspektivische Ansicht einer Zugdeichsel unter Weglassung eines Abdeckelements,
- Figur 4: in schematischer Ansicht eine Draufsicht auf Teile eines auflaufgebremsten Anhängerfahrzeugs,
- Figur 5: eine perspektivische Ansicht eines Zusatzbremssystems von der einen Seite her betrachtet,
- Figur 6: eine perspektivische Ansicht eines Zusatzbremssystems von der anderen Seite her betrachtet,
- Figuren 7 bis 11: perspektivische Ansichten eines Zusatzbremssystems bei geöffnetem Gehäuse in verschiedenen Montagestadien und
- Figur 12: eine schematische Seitenansicht eines Zusatzbremssystems mit einer mit einer Lösevorrichtung versehenen Zugstange,
- Figur 13: eine vergrößerte Seitenansicht der Lösevorrichtung in einer ersten Stellung,
- Figur 14: eine Seitenansicht der Lösevorrichtung in einer zweiten Stellung,
- Figur 15: eine Seitenansicht der Lösevorrichtung in einer weiteren Stellung.

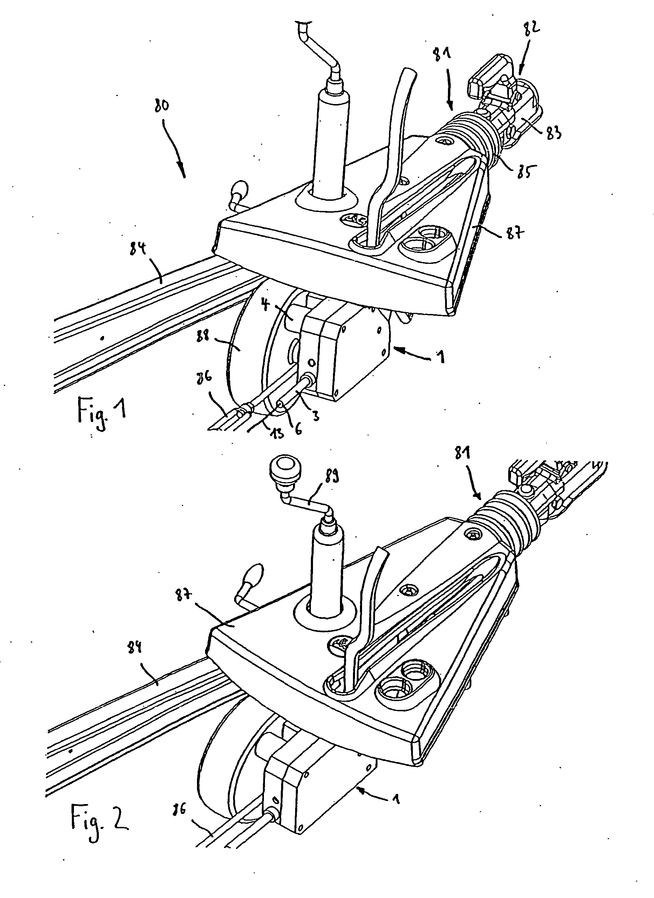

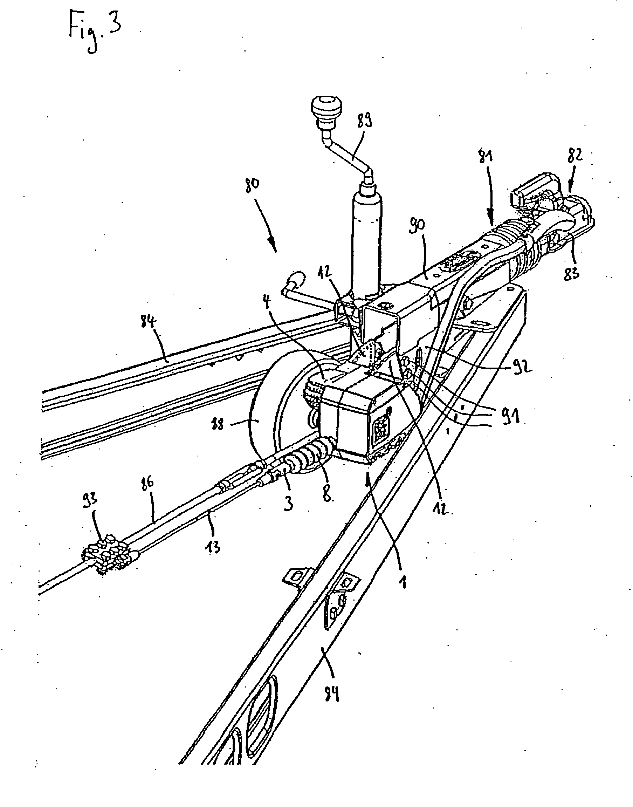

In den Figuren 1 und 2 ist in perspektivischer Ansicht das vordere Ende einer Zugdeichsel 80 eines auflaufgebremsten Anhängerfahrzeugs mit einem Zusatzbremssystem 1 dargestellt. Die Auflaufbremse 81 befindet sich an einer mit einer Kupplungseinrichtung 82 versehenen Zugstange 83. Die Zugstange 83 ist gegenüber der Zugdeichsel, die aus zwei triangelförmig aufeinander zu laufenden Holmen 84 besteht, verschiebbar. Von den Holmen 84 ist in den Figuren 1 und 2 nur der linke dargestellt. Ein zweiter Fahrzeugholm 84, der sich symmetrisch zur Fahrzeugmittelachse auf der anderen Seite der Zugdeichsel 80 erstreckt, lässt sich in Figur 3 erkennen.

Das Anhängerfahrzeug wird über die vorne an der Zugdeichsel 80 vorgesehene Kupplungseinrichtung 82 an einer Anhängerkupplung eines Zugfahrzeugs angekuppelt. Wenn das Zugfahrzeug abgebremst wird, verschiebt sich im Bereich der Auflaufbremseinrichtung 81 deren hinteres Teil aufgrund der Massenträgheit des Anhängerfahrzeugs gegenüber der Zugstange 83. Diese Relativbewegung wird von der Auflaufbremseinrichtung 81, von der nur ein die innen liegenden Komponenten der Auflaufbremse vor Verunreinigungen schützender Balg 85 zu erkennen ist, über ein Bremsgestänge 86 und weitere im Kraftfluss liegende Bremskomponenten in den mit den Fahrzeugbremsen versehenen Achsenbereich des Anhängerfahrzeugs weitergeleitet und dort zur Bremsbetätigung genutzt. Diese Bremsbetätigung des Anhängerfahrzeugs erfolgt entsprechend der Bremsverzögerung des Zugfahrzeugs.

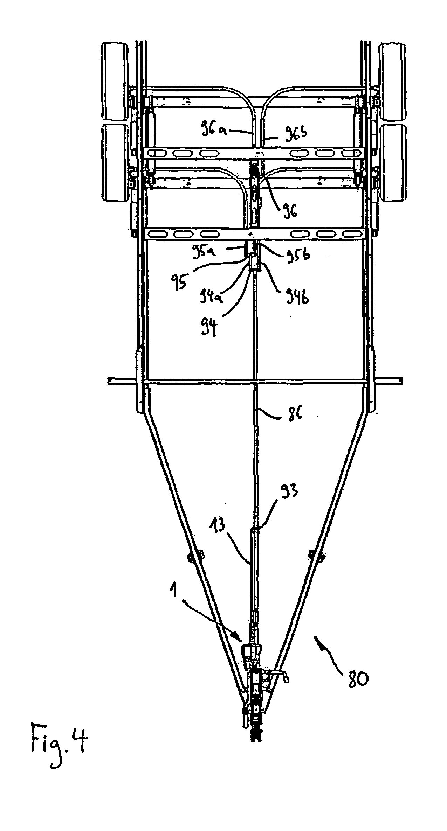

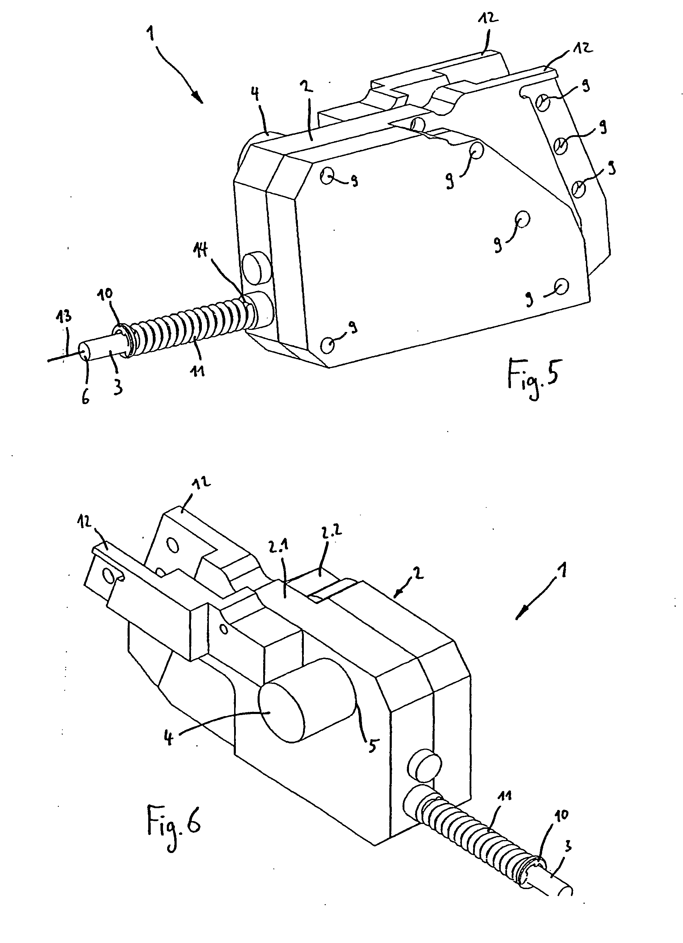

In den Figuren 3 und 4 ist das vordere Ende der Zugdeichsel 80 ohne die in den Figuren 1 und 2 dargestellte Abdeckung 87 dargestellt. Wie sich der Darstellung in Fig. 3 entnehmen lässt, befindet sich unterhalb der Abdeckung 87 das Auflaufbremsgehäuse 90 der Auflaufbremseinrichtung 81. Das Auflaufbremsgehäuse 90 wird gebildet von einem im Querschnitt in etwa U-förmigen Blechprofil. Am hinteren Ende des Auflaufbremsgehäuses 90 ist das Zusatzbremssystem 1 an diesem festgelegt. Das Gehäuse des Zusatzbremssystems 1 weist in Fahrtrichtung betrachtet zwei parallel zueinander ausgerichtete Flansche 12 mit beim Ausführungsbeispiel jeweils drei durchgängigen Montagebohrungen 9 auf, vgl. auch Fig.5. Die Flansche 12 sind von fahrzeughinten her in das Profil des Auflaufbremsgehäuses 90 bzw. in das Profil eines unterhalb des Auflaufbremsgehäuses 90 angeordneten Gehäuses 92, in dem ein Umlenkhebel für das Bremsgestänge 86 untergebracht ist, hinein geschoben und über drei sich quer zur Fahrtrichtung durch die am Flansch 12 vorgesehenen Bohrungen 9 erstreckende Montagebolzen 91 mit diesem verbunden.

Aufgrund dieser Befestigung eignet sich das Zusatzbremssystem 1 auch als Nachrüstlösung für bereits im Betrieb befindliche Anhängerfahrzeuge. Hierzu müssen lediglich auf beiden Seiten des Gehäuses 92 jeweils drei Bohrungen in dieses eingebracht werden. Danach kann das Zusatzbremssystem 1 in das Gehäuse 92 eingeschoben und durch Verschraubungen 91 sicher an diesem festgelegt werden. Das Gehäuse 92 muss nicht, wie in Fig. 3 dargestellt, zweistückig zu dem Auflaufbremsgehäuse 90 ausgeführt sein. Ebenso ist es möglich, das Auflaufbremsgehäuse 90 und das Gehäuse 92 durch eine Verlängerung der Schenkel des U-Profils des Auflaufbremsgehäuses 90 einstückig miteinander auszubilden. Auch die das Stützrad 88 tragende Kurbel 89 ist seitlich an das Auflaufbremsgehäuse 90 angeflanscht. Von daher ist es möglich, dass der Hersteller der Auflaufbremseinrichtung 81 diese mit einem Zusatzbremssystem 1 und/oder der Kurbel 89 als vormontierte Einheit ausstattet und der Fahrzeugbauer, beispielsweise ein Hersteller von Wohnanhängern, diese Elemente nicht separat zu montieren braucht, wodurch sich eine Montagevereinfachung für den Fahrzeugbauer ergibt.

Neben der Festlegung des Zusatzbremssystems 1 am Auflaufbremsgehäuse 90 bzw. am Gehäuse 92 ist in Fig. 3 auch die Kopplung des über das Zusatzbremssystem 1 bewegbaren Seilzugs 13 am Bremsgestänge 86 der Auflaufbremse dargestellt. Der Seilzug 13 verläuft parallel zum Bremsgestänge 86 und ist über ein klemmenartiges Montageelement 93 an diesem festgelegt.

Wie sich der ein zweiachsiges Anhängerfahrzeug darstellenden Fig. 4 entnehmen lässt, befindet sich das Montageelement 93 in Fahrzeugrichtung betrachtet vor der ersten Ausgleichswaage 94. Bei der Ausgleichswaage 94 handelt es sich um eine Art Wippe, die die am Bremsgestänge 86 anliegende Zugkraft auf zwei Zweige 94a, 94b verteilt. Der eine Zweig 94a dient zur Betätigung der Bremsen der vorderen Achse des Doppelachsaggregats. Hierzu ist auch der Zweig 94a mit einer Ausgleichswaage 95 versehen, über die sich die Zugkraft auf zwei Zweige 95a, 95b verteilt, die jeweils einer Fahrzeugbremse der vorderen Achse zugeordnet sind. Zur Betätigung der Bremsen der hinteren Fahrzeugachse ist der Zweig 94b vorgesehen. Auch dieser verzweigt sich über eine Ausgleichswaage 96 in zwei weitere Zweige 96a, 96b, über welche die Betätigung der rechten und linken Bremse der hinteren Fahrzeugachse erfolgt. Der Seilzug 13 ist vorzugsweise vor der ersten Ausgleichswaage 94 über das Montageelement 93 mit dem Bremsgestänge 86 gekoppelt.

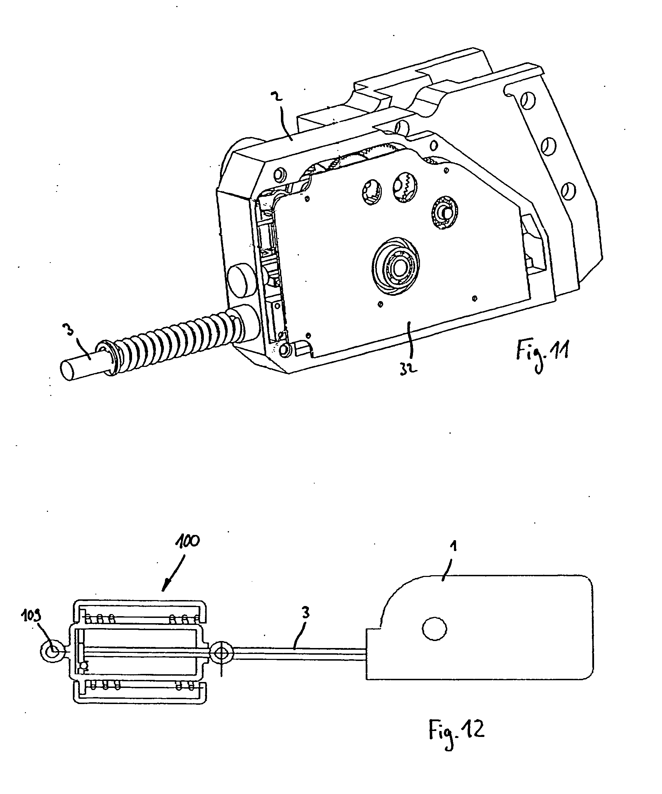

Einzelheiten einer ersten Ausführung des Zusatzbremssystems 1 werden nachfolgend unter Zuhilfenahme der Figuren 5 bis 11 erläutert. Die Figuren 12 bis 15 zeigen eine weitere Ausführung eines Zusatzbremssystems, auf die später eingegangen werden wird.

Wie die Darstellungen in den Figuren 5 und 6 erkennen lassen, weist das Zusatzbremssystem 1 ein aus zwei Gehäusehälften 2.1, 2.2 zusammengesetztes Gehäuse 2 auf, aus dem ein stangenförmiges Zugelement 3 axial verschiebbar nach fahrzeughinten herausgeführt ist. Im Bereich des aus dem Gehäuse 2 ragenden Endes des Zugelements 3 ist ein Kopplungspunkt 6 vorgesehen. Über den Kopplungspunkt 6 ist das Zugelement 3 an Bauteile bzw. Komponenten der Fahrzeugbremse so angebunden, dass diese den Bewegungen des Zugelements 3 folgen und dadurch die Fahrzeugbremse betätigt wird.

Beim Ausführungsbeispiel ist der Kopplungspunkt 6 über einen unter flachem Winkel am Bremsgestänge 86 angreifenden Seilzug 13 an das Bremsgestänge 86 angebunden, vgl. auch Fig. 1. Der Kopplungspunkt muss nicht, wie u.a. in Fig. 5 schematisch dargestellt, an einer Stirnseite des Zugelements 3 ausgebildet sein. Denkbar sind auch andere Ausbildungen, beispielsweise als eine quer durch das Zugelement 3 verlaufende Durchgangsbohrung, als Umfangsnut oder unter Zuhilfenahme von Zusatzelementen, etwa Schellen o.ä.

Aus einer Öffnung 5 der Gehäusehälfte 2.1 ragt ein Betätigungselement 4 heraus, bei dem es sich um einen Elektromotor handelt. Im vorderen Bereich des Zusatzbremssystems 1 sind die Flansche 12 zum Festlegen des Zusatzbremssystems 1 über die dortigen Montagebohrungen 9 vorgesehen. Darüber hinaus sind mehrere Bohrungen 9 zum Verschrauben der Gehäusehälften 2.1, 2.2 vorgesehen.

Am hinteren Ende des Gehäuses 2 ist das Zugelement 3, das nachfolgend auch als "Stange" oder "Zugstange" bezeichnet wird, aus einer Öffnung 14 aus dem Gehäuse 2 herausgeführt. Zwischen einem an der Stange 3 festgelegten Ring 10 und dem Gehäuse 2 bzw. der Öffnung 14 ist eine Rückhaltefeder 11 vorgesehen, die die Stange 3 und damit den Kopplungspunkt 6 in Richtung der dargestellten Ausgangsstellung drückt, worauf nachfolgend noch näher eingegangen. Ebenfalls zwischen dem Ring 10 und der Öffnung 14 ist ein Faltenbelag 8 angeordnet, der das Gehäuseinnere und die Rückhaltefeder 11 vor Verunreinigungen, etwa Staub oder Schmutzwasser schützt, vgl. Fig. 3.

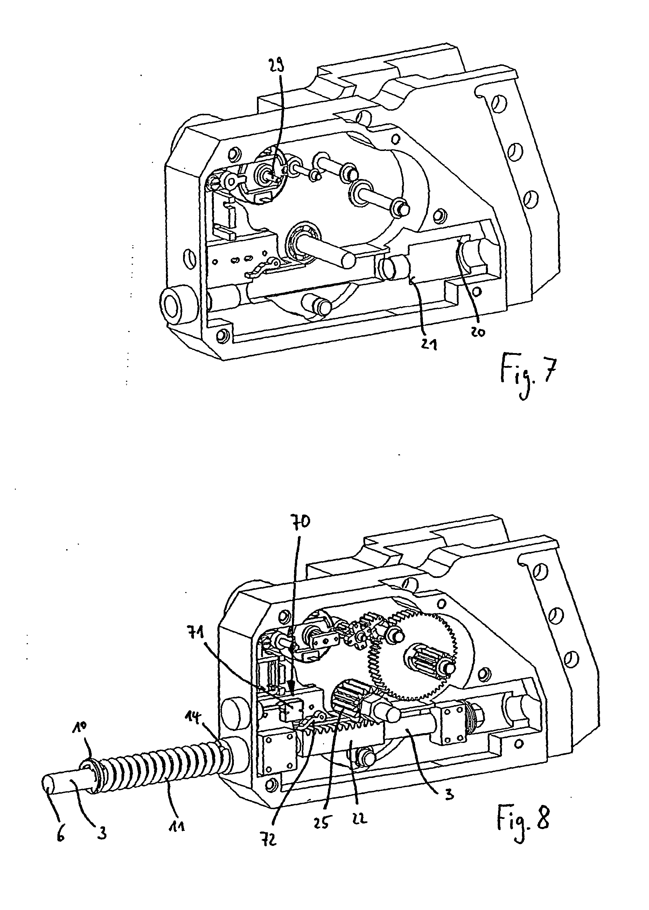

Einzelheiten des inneren Aufbaus des Zusatzbremssystems 1 lassen sich den Darstellungen in den Figuren 7 bis 11 entnehmen, die verschiedene Montagestadien des Zusatzbremssystems zeigen. In Figur 7 dargestellt ist ein Montagestadium, bei dem noch relativ wenige Bauteile montiert sind, wobei in Figur 11 alle wesentlichen Bauteile montiert sind.

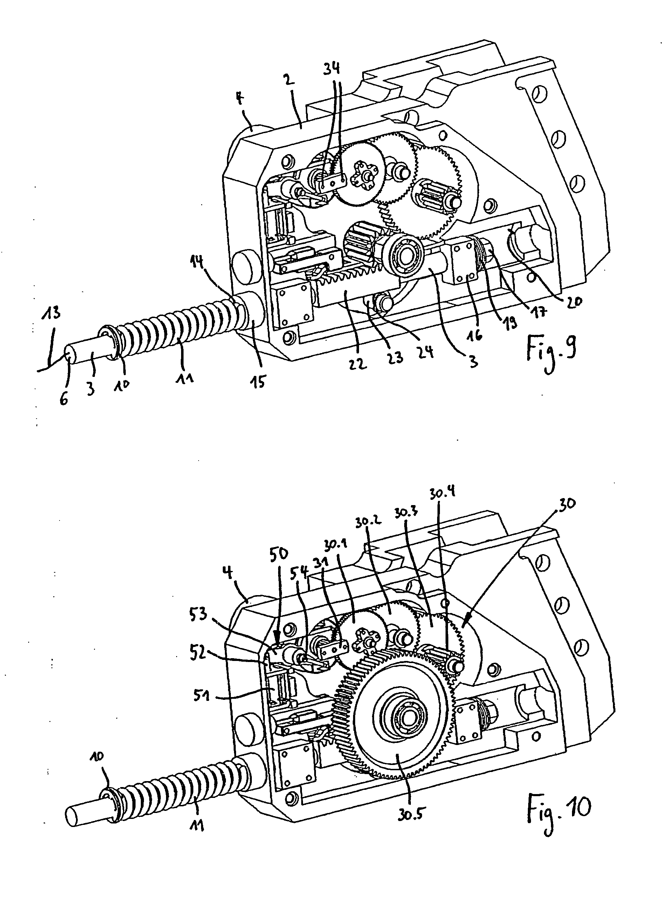

Wie sich der Darstellung in Figur 9 entnehmen lässt, ist die Stange 3 über eine Hülse 15, z.B. eine Gleitlagerhülse, in das Gehäuseinnere hineingeführt. Die Stange 3 weist fest eine Zahnstange 22 auf, die sich über einen gewissen Längsbereich der Stange 3 erstreckt. Dahinter ist die Stange 3 durch ein weiteres Lager 16, z.B. ein Gleitlager, geführt. Die Stange 3 weist an ihrem Ende einen Gewindeabschnitt für eine Mutter 17 auf. Zwischen der Mutter 17 und einem an der Stange 3 ausgebildeten Absatz ist eine Vielzahl von Tellerfedern 19 über die Mutter 17 klemmend gehalten. Das auf diese Weise auf der Zugstange 3 gehaltene Paket von Tellerfedern 19 bildet eine radiale Erweiterung der Zugstange 3, die zwischen zwei axialen Anschlagflächen 20 und 21 des Gehäuses 2 hin und her bewegbar ist, vgl. auch Fig. 7. In den Figuren dargestellt ist die Ausgangsstellung des Zusatzbremssystems 1, in der die Tellerfedern 19 an der vorderen Anschlagfläche 21 anliegen. In dieser dem normalen Fahrbetrieb entsprechenden Stellung ist die Stange 3 maximal aus dem Gehäuse 2 herausbewegt. Die Tellerfedern 19 dienen zur Dämpfung der Anschlagbewegung.

Über den als Bremsbetätigungselement dienenden Elektromotor 4 kann zur Betätigung der Bremse die mit dem Bremsgestänge 86 über den Kopplungspunkt 6 und den Seilzug 13 gekoppelte Zugstange 3 weiter in das Gehäuseinnere hineinbewegt werden, wobei über den Seilzug 13 an dem Bremsgestänge 86 gezogen und so die Bremse zugespannt wird, vgl. auch Fig. 1. Beim Zuspannen der Bremse legen sich deren Reibbeläge an ihren Reibpartner, etwa eine Bremsscheibe oder -trommel an.

Wie die Darstellung in Fig. 10 erkennen lässt, ist der Elektromotor 4 über ein Getriebe 30, bestehend aus einer Vielzahl von Zahnrädern 30.1 bis 30.5, mit der Zahnstange 22 über ein Ritzel 25 (vgl. Fig. 8) gekoppelt, wodurch die Drehungen der Motorwelle des Elektromotors 4 in eine translatorische Bewegung der Stange 3 überführt werden. Bei dem Getriebe 30 handelt es sich um ein Getriebe mit einer Kraftübersetzung bzw. Weguntersetzung, beim Ausführungsbeispiel mit einem Verhältnis von 1 :447, so dass ein vergleichsweise schwacher Elektromotor 4 als Betätigungselement ausreicht. Das Getriebe 30 ist freilaufend, d.h. dass sich das in das Gehäuse 2 hinein bewegte Zugelement 3 auch ohne Betätigung des Elektromotors 4 durch Zug in Richtung der Ausgangsstellung bewegen lässt und eine solche Bewegung nicht durch das Getriebe 30 blockiert ist.

Bei Betätigung des Zusatzbremssystems 1, z.B. infolge einer erkannten Schlingerbewegung oder zur Verstärkung der Bremskraft bei Auflauf-Bremsvorgängen, wird zunächst der Elektromotor 4 bestromt, wodurch dessen Drehungen über das Getriebe 30 auf den Zahnstangenabschnitt 22 der Zugstange 3 übertragen werden. Die Zugstange 3 und damit der Kopplungspunkt 6 werden von der Ausgangsstellung in Richtung der Betätigungsstellung bewegt und das Bremsgestänge über den Seilzug 13 mit einer Zugkraft beaufschlagt, die zum Zuspannen der Bremse führt. Dabei bewegt sich der Ring 10 auf die Öffnung 14 zu, wodurch die Feder 11 gespannt wird.

Die Zuspannkraft bzw. Betätigungsstellung wird eine gewisse Zeit lang aufrecht erhalten, bis sich die gewünschte Bremswirkung beim Anhängerfahrzeug einstellt. Zur Aufrechterhaltung der Bremsstellung kann der Elektromotor 4 die entsprechende Haltekraft aufbringen. Alternativ oder zusätzlich ist es zur Entlastung des Elektromotors 4 möglich, eine Haltevorrichtung 50 (vgl. Fig. 10) zum Halten der Motorwelle 29 (vgl. Figur 7) vorzusehen, die ein Verdrehen der Motorwelle 29 aus der Bremsstellung blockiert.

Einzelheiten der Haltevorrichtung 50 werden nachfolgend unter Bezugnahme auf Figur 10 erläutert. Die Haltevorrichtung 50 ist seitlich neben der Motorwelle 29 angeordnet und setzt sich zusammen aus einem Elektromagneten 51, über den ein Stift 52 bewegbar ist. Der Stift 52 ist an seinem freien Ende geschlitzt und dient zur Aufnahme des einen Endes einer über eine Achse 54 schwenkbar am Gehäuse 2 angelenkten Wippe 53. Bei Bestromung des Elektromagneten 51 verschiebt sich der Stift 52 in axialer Richtung, wodurch das eine Ende der Wippe 53 gemeinsam mit dem Stift 52 bewegt wird. Das andere Ende der Wippe schwenkt aufgrund der Anlenkung um die Achse 54 aus und blockiert über einen an der Motorwelle 29 befestigten Drehgeber 31 ein Verdrehen der Motorwelle 29. Nach abgeschlossener Bremsung wird die Stromversorgung des Elektromagneten 51 unterbrochen, so dass der Bolzen 52 in seine Ausgangslage zurückbewegt und die Motorwelle 29 wieder freigegeben wird und das Zusatzbremssystem über die Feder 11 wieder in die Ausgangsstellung versetzt wird.

Bei bekannten Zusatzbremssystemen kann es bei Ausfall des Elektromotors 4 in der zuvor Betätigungsstellung, in welcher die Stange 3 in das Gehäuse hineinbewegt und die Bremse zugespannt ist, sein, dass die Zugstange ihre Position innerhalb des Gehäuses 2 beibehält, wodurch es zu einem Heißlaufen der Bremse kommen kann.

Zur Vermeidung derartiger Heißläufer ist die in der Betätigungsstellung gespannte Rückstellfeder 11 vorgesehen. Da es sich bei dem Getriebe 30 um freilaufendes Getriebe ohne Selbsthemmung handelt, wird das Zugelement 3 und damit der an dieser ortsfest ausgebildete Kopplungspunkt 6 bei Ausfall des Elektromotors 4 durch die Kraft der Feder 11 in Richtung der Ausgangsstellung aus dem Gehäuse 2 hinausgedrückt, wodurch der auf das Bremsgestänge 86 ausgeübte Zug entfällt und die Bremse nicht weiter schleift.

Auch die Haltevorrichtung 50 ist so konstruiert, dass bei Stromausfall, z. B. in Folge eines verschleißbedingten Kabelbruchs, der Stift 52 nach oben bewegt wird, wodurch die Wippe 53 die Motorwelle freigibt, so dass die Zahnräder des Getriebes 30 über die Kraft der Feder 11 gedreht und die Zugstange bewegt werden kann.

Die Feder 11 dient als Energiespeicher, der beim Zuspannen der Bremse zunächst Energie aufnimmt und diese dann nach Beendigung des Bremsvorgangs oder im Falle eines Ausfalls des Elektromotors 4 wieder abgibt, um das Zugelement 3 aus dem Gehäuse 2 in Richtung der Ausgangsstellung zu verschieben und auf diese Weise die Bremse zu lösen.

In dem Gehäuse 2 des Zusatzbremssystems 1 ist, wie Fig. 8 erkennen lässt, darüber hinaus eine Positionserkennung 70, bestehend aus einem Tastschalter 71 und einer weiteren Wippe 72, vorgesehen, welche die in Figur 8 dargestellte Ausgangsstellung der Zugstange 3 erkennt. Wenn die Zahnstange 22 sich nämlich in Richtung der Gehäuseöffnung 14 bewegt, beginnt die Wippe 72 zu schwenken und betätigt den Tastschalter 71. Das auf diese Weise gewonnene elektrische Signal dient zur Erkennung der Ausgangsstellung.

In den Figuren 12 bis 15 ist eine weitere Ausführungsform eines Zusatzbremssystems 1 dargestellt. Die Darstellung in Figur 12 ist eher schematisch. Das in Figur 12 dargestellte Zusatzbremssystem 1 unterscheidet sich von dem anhand der Figuren 5 bis 11 beschriebenen System darin, dass beim Zusatzbremssystem in Figur 12 ein Getriebe mit Selbsthemmung eingesetzt ist. Das heißt, es ist nicht möglich, die Zugstange 3 bei Ausfall des Betätigungselements aus dem Gehäuse herauszuziehen.

Um bei Ausfall des Stroms bzw. des Betätigungselements Heißläufer zu vermeiden, ist die Zugstange 3 mit einer Lösevorrichtung 100 versehen, wodurch der Kopplungspunkt 109 im Falle eines Stromausfalls gegenüber der festsitzenden Zugstange 3 bewegbar ist. Einzelheiten der Lösevorrichtung 100 werden nachfolgend anhand der vergrößerten Darstellungen in den Figuren 11 bis 13 beschrieben werden.

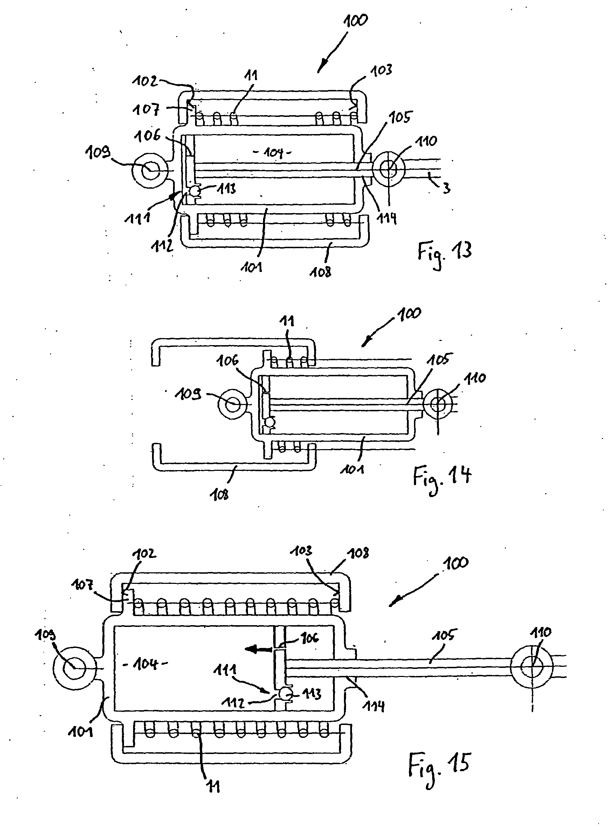

In Figur 13 ist die Ausgangsstellung der Lösevorrichtung 100 dargestellt. Die Lösevorrichtung 100 weist einen ösenförmigen Kopplungspunkt 109 auf, gegenüber dem das Bremsgestänge festgelegt ist. Die Festlegung kann direkt oder über weitere Elemente, beispielsweise einen Seilzug, erfolgen. Auf der anderen Seite ist ein Montagepunkt 110 zu erkennen, an dem die Zugstange 3 festgelegt ist. Das Zugelement 3 kann im Bereich des Montagepunktes 110 auch einstückig mit der Lösevorrichtung 100 ausgebildet sein, jedoch ergibt sich durch die zweistückige Ausbildung im Bereich des Montagepunkts 110 die Möglichkeit, die Lösevorrichtung 100 auch als Nachrüstlösung bei bereits bestehenden Zusatzbremssystemen einzusetzen, bei denen der Ausfall des Betätigungselements bislang zu einem Heißlaufen der Bremse geführt hat.

Die Lösevorrichtung 100 setzt sich zusammen aus einem Zylinder 101 in dessen Innerem eine Hydraulikflüssigkeit 104 angeordnet ist. Durch eine Öffnung 114 des Zylinders 101 ist ein Kolben 105 geführt. Der Kolben 105 weist an seinem einen Ende einen tellerförmigen Abschnitt auf, der gegenüber der Innenwand des Zylinders 101 abgedichtet und mit einer im Durchmesser kleinen Durchströmöffnung 106 versehen ist. Darüber hinaus ist am Tellerabschnitt des Kolbens 105 ein Ventil 111 vorgesehen, das aus einer größeren Durchströmöffnung 112 und einer Kugel 113 besteht.

Am Außenumfang des Zylinders 101 ist ein Radialbund 107 vorgesehen. Der Radialbund 107 und damit der Zylinder 101 ist zwischen zwei gegenüberliegend angeordneten Anschlagflächen 102, 103 hin und her bewegbar. Zwischen dem Radialbund 107 und der Anschlagfläche 103 ist die Rückhaltefeder 11 angeordnet, die ein Teil der Lösevorrichtung 100 ist.

Bei Betätigung der Bremse wird an dem Zugelement 3 gezogen und die Kraft über den Kopplungspunkt 109 auf das Bremsgestänge übertragen. Dabei wandert der Zylinder 101 innerhalb einer die Anschlagflächen 102, 103 bereitstellenden, fahrzeugfesten Hülse 108 in Betätigungsrichtung, wodurch über den Radialbund 107 die Rückhaltefeder 11 gespannt wird, vgl. Darstellung in Figur 14. Die Federkraft der gespannten Feder 11 drückt den Kopplungspunkt 109 in Richtung der Ausgangsstellung bzw. beaufschlagt die Punkte 109, 108 gegeneinander mit einer Kraft.

Die Darstellung in Figur 14 entspricht der Betätigungsstellung, in welcher die Reibbeläge der Fahrzeugbremse an ihrem Reibpartner anliegen und eine Bremswirkung erzeugt wird. Der Durchmesser der Durchströmöffnung 106 ist so bemessen, dass sich während der üblichen Dauer einer Zusatzbremsung, im Falle einer Schlinger-Bremsung etwa zehn Sekunden, noch keine nennenswerte Durchflussmenge einstellt, so dass der Kolben 105 gegenüber dem Zylinder 101 in etwa seine ursprüngliche Position beibehält.

Anders verhält es sich, wenn während der Bremsbetätigung (vgl. Darstellung in Figur 14) das Betätigungselement des Zusatzbremssystems ausfällt. Da es sich bei der Ausführung gemäß den Figuren 12 bis 15 um ein Zusatzbremssystem mit selbsthemmendem Getriebe handelt, kann die Zugstange 3 bei Stromausfall über die Feder 11 nicht aus dem Gehäuse des Zusatzbremssystems 1 herausgezogen werden. Allerdings stellt sich eine Strömung von der einen Seite des Tellerabschnitts des Kolbens 105 durch die Öffnung 106 zur anderen Seite hin ein, wodurch nach einiger Zeit der Zylinder 101 und damit der Kopplungspunkt 109 gegenüber dem feststehenden Kolben 105, getrieben durch die Kraft der gespannten Feder 11, in Richtung des Bremsgestänges verschoben wird. Hierdurch ändert sich der Abstand zwischen dem Kopplungspunkt 109 und dem Montagepunkt 110, so dass sich Lösevorrichtung 100 in die Länge zieht. Hierdurch entfällt der am Bremsgestänge anliegende Zug, wodurch die Zuspannung der Bremse aufgehoben und ein Heißlaufen der Bremse verhindert wird. Die Endstellung nach einem erfolgten Ausfall des Betätigungselements ist nach einer Zeit erreicht, die deutlich größer ist, als die üblichen Zusatzbremszeiten und in Figur 15 dargestellt. In dieser Stellung befindet sich der Kopplungspunkt 109 in der Ausgangsstellung, wohingegen sich das Zugelement 3 noch innerhalb des Gehäuses des Zusatzbremssystems befindet.

Um die Lösevorrichtung 100 aus der in Fig. 15 dargestellten Stellung zügig in die Stellung nach Fig. 13 überführen zu können, ist ein Ventil 111 vorgesehen, das beim Einschieben des Kolbens 105 in den Zylinder 101 durch Abheben der Kugel 113 von der Öffnung 112 den Durchflussquerschnitt des Tellerabschnitts deutlich erhöht.

Die anhand der Figuren 12 bis 15 erläuterte Lösevorrichtung 100 ist nicht auf solche Zusatzbremssysteme mit einem selbsthemmenden Getriebe beschränkt. Ebenso kann sie bei dem anhand der Figuren 5 bis 11 beschriebenen Zusatzbremssystem ohne Selbsthemmung Einsatz finden. Die Lösevorrichtung 100 bzw. die mit der Lösevorrichtung 100 versehene Zugstange 3 funktioniert unabhängig von der inneren Bauweise des Zusatzbremssystems. Damit wird auch bei einem freilaufenden Getriebe selbst im Falle eines Blockierens des Getriebes, beispielsweise durch sich im Inneren des Gehäuses lösende Teile, ein Heißlaufen der Bremse vermieden.

### Bezugszeichenliste

- 1: Zusatzbremssystem
- 2: Gehäuse
- 2.1: Gehäusehälfte
- 2.2: Gehäusehälfte
- 3: Stange, Zugstange
- 4: Betätigungselement, Elektromotor
- 5: Gehäuseöffnung
- 6: Kopplungspunkt
- 8: Balg
- 9: Montagebohrungen
- 10: Ring
- 11: Feder
- 12: Flansch
- 13: Seilzug
- 14: Öffnung
- 15: Hülse, Gleitlagerhülse
- 16: Gleitlager
- 17: Mutter
- 19: Tellerfeder
- 20: Anschlagfläche
- 21: Anschlagfläche
- 22: Zahnstange
- 23: Gleitlager
- 24: Ring
- 25: Ritzel
- 28: Ritzel
- 29: Motorwelle
- 30: Getriebe
- 30.1: Zahnrad
- 30.2: Zahnrad
- 30.3: Zahnrad
- 30.4: Zahnrad
- 30.5: Zahnrad
- 31: Element, Drehgeber
- 32: Platine
- 50: Haltevorrichtung
- 51: Elektromagnet
- 52: Stift, Bolzen
- 53: Wippe
- 54: Achse
- 70: Positionserkennung
- 71: Tastschalter
- 72: Wippe
- 80: Zugdeichsel
- 81: Auflaufbremse
- 82: Kupplungseinrichtung
- 83: Zugstange
- 84: Holm
- 85: Balg
- 86: Bremsgestänge
- 87: Abdeckung
- 88: Stützrad
- 89: Kurbel
- 90: Auflaufbremsgehäuse
- 91: Montagebolzen
- 92: Gehäuse
- 93: Montageelement
- 94: Ausgleichswaage
- 94a,b: Zweig
- 95: Ausgleichswaage
- 95a,b: Zweig
- 96: Ausgleichswaage
- 96a,b: Zweig

- 100: Lösevorrichtung
- 101: Zylinder, Hydraulikzylinder
- 102: Anschlagfläche
- 103: Anschlagfläche
- 104: Hydraulikflüssigkeit
- 105: Kolben
- 106: Durchströmöffnung
- 107: Radialbund
- 108: Hülse
- 109: Kopplungspunkt
- 110: Montagepunkt
- 111: Ventil
- 112: Öffnung
- 113: Kugel
- 114: Öffnung

## Patentansprüche

1. Zusatzbremssystem zur Betätigung der Bremsen auflaufgebremster Anhängerfahrzeuge, mit einem bei Bremsbetätigung im Kraftfluss liegenden Zugelement (3), das über ein Betätigungselement (4) von einer Ausgangsstellung in eine Betätigungsstellung bewegbar und über einen Kopplungspunkt (6, 109) an Bremskomponenten des Anhängerfahrzeugs anbindbar ist,
**gekennzeichnet durch**
eine in der Betätigungsstellung des Zugelements (3) gespannte Rückstellfeder (11), die den Kopplungspunkt (6, 109) in Richtung der Ausgangsstellung mit einer Kraft beaufschlagt.

2. Zusatzbremssystem nach Anspruch 1, **dadurch gekennzeichnet, dass** das Betätigungselement (4) und das Zugelement (3) über ein Getriebe (30), vorzugsweise ein freilaufendes Getriebe, miteinander wirkverbunden sind.

3. Zusatzbremssystem nach Anspruch 2, **dadurch gekennzeichnet, dass** das Getriebe (30) aus Radialzahnrädem (30.1, 30.2, 30.3, 30.4, 30.5) zusammengesetzt ist.

4. Zusatzbremssystem nach Anspruch 3, **dadurch gekennzeichnet, dass** die Zahnräder (30.1, 30.2, 30.3, 30.4, 30.5) des Getriebes (30) aus einem Kunststoffmaterial bestehen.

5. Zusatzbremssystem nach einem der Ansprüche 1 bis 4, **dadurch gekennzeichnet, dass** der Kopplungspunkt (6) an dem Zugelement (3) ausgebildet ist.

6. Zusatzbremssystem nach einem der Ansprüche 1 bis 5, **dadurch gekennzeichnet, dass** die Rückstellfeder (11) zwischen einem mit dem Zugelement (3) bewegbaren Element (10) und einem feststehenden Element (14) eingespannt ist.

7. Zusatzbremssystem nach einem der Ansprüche 2 bis 6, **dadurch gekennzeichnet, dass** die Rückstellfeder (11) zwischen einem mit dem Zugelement (3) bewegbaren Ring (10) und einer Gehäuseöffnung (14) des Gehäuses (2) des Zusatzbremssystems untergebracht ist.

8. Zusatzbremssystem nach Anspruch 2, **dadurch gekennzeichnet, dass** das Getriebe (30) ein Getriebe mit Selbsthemmung ist.

9. Zusatzbremssystem nach einem der Ansprüche 2 bis 8, **dadurch gekennzeichnet, dass** der Kopplungspunkt (109) gegenüber dem Zugelement (3) bewegbar ist.

10. Zusatzbremssystem nach Anspruch 9, **dadurch gekennzeichnet, dass** der Kopplungspunkt (109) an einer mit dem Zugelement (3) verbundenen Lösevorrichtung (100) vorgesehen ist.

11. Zusatzbremssystem nach Anspruch 10, **dadurch gekennzeichnet, dass** die Lösevorrichtung (100) einen zwischen zwei Anschlagflächen (102, 103) hin und her bewegbaren Zylinder (101) aufweist, in dessen Innerem eine Hydraulikflüssigkeit (104) und ein mit einer Durchströmöffnung (106) versehener Kolben (105) angeordnet ist.

12. Zusatzbremssystem nach Anspruch 11, **dadurch gekennzeichnet, dass** der Zylinder (101 auf seinem Umfang mit einem Radialbund (107) versehen ist, und die Rückstellfeder (11) zwischen dem Bund (107) und der Anschlagfläche (103) angeordnet ist.

13. Zusatzbremssystem nach einem der vorangehenden Ansprüche, **dadurch gekennzeichnet, dass** das Betätigungselement (4) ein Elektromotor ist, und dass eine Haltevorrichtung (50) die Motorwelle (29) des Elektromotors (4) in der Betätigungsstellung gegen Verdrehen sichert.

14. Zusatzbremssystem nach Anspruch 13, **dadurch gekennzeichnet, dass** die Haltevorrichtung (50) einen Elektromagneten (51) aufweist, über den ein Betätigungsstift (52) axial bewegbar ist, wobei der Stift (52) an seinem freien Ende mit der einen Seite einer Wippe (53) verbunden ist, deren andere Seite verdrehsicher gegen die Motorwelle (29) oder ein an der Motorwelle (29) angeordnetes Element (31) schwenkbar ist.

15. Lösevorrichtung für Zusatzbremssysteme, mit einem Kopplungspunkt (109) zur Anbindung an Komponenten einer Fahrzeugbremse, und einem Montagepunkt (110) zur Anbindung an ein Zugelement (3) des Zusatzbremssystems,
**dadurch gekennzeichnet,**
**dass** der Abstand zwischen dem Kopplungspunkt (109) und dem Montagepunkt (110) veränderbar ist.

16. Lösevorrichtung nach Anspruch 15, **gekennzeichnet durch** eine Rückstellfeder (11), die den Kopplungspunkt (109) und den Montagepunkt (110) gegeneinander mit einer Federkraft beaufschlagt.

17. Lösevorrichtung nach einem der Ansprüche 15 und/oder 16, **gekennzeichnet durch** einen zwischen zwei Anschlagflächen (102, 103) hin und her bewegbaren Zylinder (101), in dessen Innerem eine Hydraulikflüssigkeit (104) und ein mit einer Durchströmöffnung (106) versehener Kolben (105) angeordnet ist.

18. Lösevorrichtung nach Anspruch 17, **dadurch gekennzeichnet, dass** der Zylinder (101) auf seinem Umfang mit einem Radialbund (107) versehen ist, und die Rückstellfeder (11) zwischen dem Bund (107) und der Anschlagfläche (103) angeordnet ist.

19. Lösevorrichtung nach Anspruch 17, **dadurch gekennzeichnet, dass** der Kopplungspunkt (109) an dem Zylinder (101) und der Montagepunkt (110) an dem Kolben (105) angeordnet ist oder umgekehrt.

## Claims

1. An additional braking system for actuating the brakes of trailer vehicles with over-run braking, with a towing element (3) which is acted upon with the power flow on actuation of the brake and which is movable from a starting position into an actuating position by way of an actuating element (4) and is capable of being attached to braking components of the trailer vehicle by way of a coupling point (6, 109), **characterized by** a return spring (11) which is stressed in the actuating position of the towing element (3) and which acts upon the coupling point (6, 109) with a force in the direction of the starting position.

2. An additional braking system according to claim 1, **characterized in that** the actuating element (4) and the towing element (3) are operatively connected to each other by way of a gear mechanism (30), preferably a free-running gear mechanism.

3. An additional braking system according to claim 2, **characterized in that** the gear mechanism (30) is formed from radial gear wheels (30.1, 30.2, 30.3, 30.4, 30.5).

4. An additional braking system according to claim 4, **characterized in that** the gear wheels (30.1, 30.2, 30.3, 30.4, 30.5) of the gear mechanism (30) consist of a plastics material.

5. An additional braking system according to any one of claims 1 to 4, **characterized in that** the coupling point (6) is formed on the towing element (3).

6. An additional braking system according to any one of claims 1 to 5, **characterized in that** the return spring (11) is stressed between an element (10) movable with the towing element (3) and a fixed element (14).

7. An additional braking system according to any one of claims 2 to 6, **characterized in that** the return spring (11) is arranged between a ring (10) movable with the towing element (3) and an opening (14) in the housing (2) of the additional braking system.

8. An additional braking system according to claim 2, **characterized in that** the gear mechanism (30) is a gear mechanism with self-locking.

9. An additional braking system according to any one of claims 2 to 8, **characterized in that** the coupling point (109) is movable with respect to the towing element (3).

10. An additional braking system according to claim 9, **characterized in that** the coupling point (109) is provided on a release apparatus (100) connected to the towing element (3).

11. An additional braking system according to claim 10, **characterized in that** the release apparatus (100) has a cylinder (101) which is movable in a reciprocating manner between two stop faces (102, 103) and in the interior of which an hydraulic liquid (104) and a piston (105) provided with a through-flow opening (106) are arranged.

12. An additional braking system according to claim 11, **characterized in that** the periphery of the cylinder (101) is provided with a radial collar (107), and the return spring (11) is arranged between the collar (107) and the stop face (103).

13. An additional braking system according to any one of the preceding claims, **characterized in that** the actuating element (4) is an electric motor, and a holding apparatus (50) prevents the shaft (29) of the electric motor (4) from rotating in the actuating position.

14. An additional braking system according to claim 13, **characterized in that** the holding apparatus (50) has an electromagnet (51) by way of which an actuating pin (52) is axially movable, wherein the pin (52) is connected at the free end thereof to one side of a rocker (53), the other side of which is pivotable in a non-twisting manner towards the motor shaft (29) or an element (31) arranged on the motor shaft (29).

15. A release apparatus for additional braking systems, with a coupling point (109) for attachment to components of a vehicle brake, and a mounting point (110) for attachment to a towing element (3) of the additional braking system, **characterized in that** the distance between the coupling point (109) and the mounting point (110) is variable.

16. A release apparatus according to claim 15, **characterized by** a return spring (11) which acts upon the coupling point (109) and the mounting point (110) with a spring force one against the other.

17. A release apparatus according to one of claims 15 and/or 16, **characterized by** a cylinder (101) which is movable in a reciprocating manner between two stop faces (102, 103) and in the interior of which an hydraulic liquid (104) and a piston (105) provided with a through-flow opening (106) are arranged.

18. A release apparatus according to claim 17, **characterized in that** the periphery of the cylinder (101) is provided with a radial collar (107), and the return spring (11) is arranged between the collar (107) and the stop face (103).

19. A release apparatus according to claim 17, **characterized in that** the coupling point (109) is arranged on the cylinder (101) and the mounting point (110) is arranged on the piston (105) or vice versa.

## Revendications

1. Système de freinage auxiliaire pour l'actionnement de freins de remorques freinées par inertie, comportant un élément de traction (3), qui est situé dans le flux de force lors de l'actionnement du frein et qui peut être déplacé par un élément d'actionnement (4) depuis une position de départ dans une position d'actionnement et qui peut être attaché par l'intermédiaire d'un point de couplage (6, 109) à des composants de freinage de la remorque,
**caractérisé par** un ressort de rappel (11), qui est tendu dans la position d'actionnement de l'élément de traction (3) et qui sollicite avec une force le point de couplage (6, 109) vers la position de départ.

2. Système de freinage auxiliaire selon la revendication 1, **caractérisé en ce que** l'élément d'actionnement (4) et l'élément de traction (3) sont en liaison active l'un avec l'autre par l'intermédiaire d'un engrenage (30), de préférence un engrenage à roue libre.

3. Système de freinage auxiliaire selon la revendication 2, **caractérisé en ce que** l'engrenage (30) est formé par des roues dentées radiales (30.1, 30.2, 30.3, 30.4, 30.5).

4. Système de freinage auxiliaire selon la revendication 3, **caractérisé en ce que** les roues dentées (30.1, 30.2, 30.3, 30.4, 30.5) de l'engrenage (30) sont réalisées en matière plastique.

5. Système de freinage auxiliaire selon l'une quelconque des revendications 1 à 4, **caractérisé en ce que** le point de couplage (6) est réalisé sur l'élément de traction (3).

6. Système de freinage auxiliaire selon l'une quelconque des revendications 1 à 5, **caractérisé en ce que** le ressort de rappel (11) est monté entre un élément (10) mobile avec l'élément de traction (3), et un élément (14) fixe.

7. Système de freinage auxiliaire selon l'une quelconque des revendications 2 à 6, **caractérisé en ce que** le ressort de rappel (11) est logé entre une bague (10) mobile avec l'élément de traction (3) et une ouverture (14) du carter (2) du système de freinage auxiliaire.

8. Système de freinage auxiliaire selon la revendication 2, **caractérisé en ce que** l'engrenage (30) est un engrenage à blocage automatique.

9. Système de freinage auxiliaire selon l'une quelconque des revendications 2 à 8, **caractérisé en ce que** le point de couplage (109) est mobile par rapport à l'élément de traction (3).

10. Système de freinage auxiliaire selon la revendication 9, **caractérisé en ce que** le point de couplage (109) est prévu sur un dispositif de desserrage (100) relié à l'élément de traction (3).

11. Système de freinage auxiliaire selon la revendication 10, **caractérisé en ce que** le dispositif de desserrage (100) comporte un cylindre (101), qui est mobile en va-et-vient entre deux surfaces de butée (102, 103) et qui contient à l'intérieur un liquide hydraulique (104) et un piston (105) muni d'une ouverture de passage (106).

12. Système de freinage auxiliaire selon la revendication 11, **caractérisé en ce que** le cylindre (101) comporte un collet de butée radial (107) sur son pourtour et le ressort de rappel (11) est agencé entre le collet de butée (107) et la surface de butée (103).

13. Système de freinage auxiliaire selon l'une quelconque des revendications précédentes, **caractérisé en ce que** l'élément d'actionnement (4) est un moteur électrique et **en ce qu'**un dispositif de retenue (50) immobilise l'arbre (29) du moteur électrique (4) pour l'empêcher de tourner dans la position d'actionnement.

14. Système de freinage auxiliaire selon la revendication 13, **caractérisé en ce que** le dispositif de retenue (50) comporte un électroaimant (51), par l'intermédiaire duquel un téton d'actionnement (52) est apte à se déplacer axialement, ledit téton (52) étant assemblé au niveau de son extrémité libre avec l'un des côtés d'un élément basculant (53), dont l'autre côté immobile en rotation est apte à pivoter contre l'arbre (29) du moteur ou un élément (31) disposé sur l'arbre (29) du moteur.

15. Dispositif de desserrage pour des systèmes de freinage auxiliaires, comportant un point de couplage (109) destiné à être attaché à des composants d'un frein du véhicule, et un point de montage (110) destiné à être attaché à un élément de traction (3) du système de freinage auxiliaire,
**caractérisé en ce que** la distance entre le point de couplage (109) et le point de montage (110) est variable.

16. Dispositif de desserrage selon la revendication 15, **caractérisé par** un ressort de rappel (11) qui sollicite par une force de ressort le point de couplage (109) et le point de montage (110) l'un vers l'autre.

17. Dispositif de desserrage selon l'une des revendications 15 et/ou 16, **caractérisé par** un cylindre (101), qui est mobile en va-et-vient entre deux surfaces de butée (102, 103) et qui contient à l'intérieur un liquide hydraulique (104) et un piston (105) muni d'une ouverture de passage (106).

18. Dispositif de desserrage selon la revendication 17, **caractérisé en ce que** le cylindre (101) comporte un collet de butée radial (107) sur son pourtour, et le ressort de rappel (11) est disposé entre le collet de butée (107) et la surface de butée (103).

19. Dispositif de desserrage selon la revendication 17, **caractérisé en ce que** le point de couplage (109) est disposé sur le cylindre (101) et le point de montage (110) sur le piston (105) ou inversement.
